# EUROPÄISCHE PATENTSCHRIFT

(11) **EP 1 633 525 B1**
(45) Veröffentlichungstag und Bekanntmachung des Hinweises auf die Patenterteilung: **01.09.2010**
(21) Anmeldenummer: 04726086.4
(22) Anmeldetag: 07.04.2004
(51) Int. Cl.: B23Q 3/12

(54) **HANDWERKZEUGMASCHINE**
HAND-HELD MACHINE TOOL
MACHINE-OUTIL A MAIN

(30) Priorität: 30.05.2003 DE 10324426
(43) Veröffentlichungstag der Anmeldung: 15.03.2006
(73) Patentinhaber: ROBERT BOSCH GMBH, 70442 Stuttgart (DE)
(72) Erfinder: FRAUHAMMER, Karl, 70771 Leinfelden-Echterdingen (DE); MEIXNER, Gerhard, 70794 Filderstadt (DE); SCHNERRING, Heinz, 72135 Dettenhausen (DE); BRAUN, Willy, 72149 Neustetten (DE); KUHNLE, Axel, 71691 Freiberg A. N. (DE)
(86) Internationale Anmeldenummer: PCT/DE2004/000726
(87) Internationale Veröffentlichungsnummer: WO 2004/108350

(56) Entgegenhaltungen:
- DE-U- 9 305 463
- US-A- 4 502 824
- US-A- 5 437 465
- US-A1- 2003 077 136

## Beschreibung

### Stand der Technik

Die Erfindung geht aus von einer.Handwerkzeugmaschine, insbesondere einen Bohr- oder Schlaghammer, nach dem Oberbegriff des Anspruchs 1. Eine solche Handwerkzeugmaschine ist beispielweise aus der US 5 437 465 A bekannt.

Bei einer bekannten Handwerkzeugmaschine (DE 28 20 128 A1) ist der Werkzeughalter einstückig mit einer Drehhülse verbunden, die drehbar auf dem Führungsrohr gelagert ist und mittels eines Drehantriebs in Rotation versetzt werden kann. Das Führungsrohr ist feststehend im Maschinengehäuse angeordnet und nimmt einen von einem Taumelantrieb in eine hin- und hergehende Axialbewegung versetzten Antriebskolben eines sog. Schlagwerks und einen Schlagkolben oder Döpper axial verschieblich auf. Zwischen dem Antriebskolben und dem Döpper ist ein Luftpolster eingeschlossen. Ist das Schlagwerk eingeschaltet, so beaufschlagt der Antriebskolben über das Luftpolster den Döpper, und dieser gibt seine Schlagenergie direkt auf das in dem Werkzeugshalter axial verschieblich und drehfest eingespannte Werkzeug ab. Ist zusätzlich der Drehantrieb eingeschaltet, so wird der Werkzeughalter in Rotation versetzt und durch diesen das Werkzeug auch gedreht.

Ein bekannter, wechselbarer Werkzeughalter für eine Handwerkzeugmaschine, insbesondere für einen Bohr- und/oder Schlaghammer (DE 32 05 063 C2), ist mittels einer Verriegelungsvorrichtung direkt auf einer eine Dreh- und Hubbewegung ausführenden Antriebsspindel axial begrenzt verschieblich und drehfest festgelegt. Hierzu weist der Werkzeughalter einen auf die Antriebsspindel aufschiebbaren Endbereich auf, der über ein Keilwellenprofil in Drehmitnahme mit der Antriebsspindel steht. In diesem Endbereich ist mindestens eine Radialbohrung angeordnet, in der eine Kugel als Verriegelungskörper radial verschieblich angeordnet ist. Die Kugel greift in eine in der Antriebsspindel ausgebildete umlaufende Längsnut ein und verriegelt den Werkzeughalter mit Axialspiel gegen Abziehen in Achsrichtung. Eine dem Einspannen des Werkzeugs in dem Werkzeugshalter dienende Schiebehülse übergreift die Kugel und blockiert deren radiale Verschiebung. Wird die Schiebehülse manuell mit Kraft zum vorderen Ende hin verschoben, so gibt sie die mindestens eine Kugel frei und der Werkzeughalter kann bei verschoben gehaltener Schiebehülse vom Führungsrohr abgezogen werden.

Bei einer bekannten Handwerkzeugmaschine mit einem drehbar im Maschinengehäuse gelagerten Führungsrohr und einem auf das Führungsrohr auf dessen aus dem Maschinengehäuse vorstehenden Endbereich aufsetzbaren, wechselbaren Werkzeughalter (Boschhammer Typ Nr. 0611 249 700) weist der das Führungsrohr übergreifende Endabschnitt des Werkzeughalters vier um 90° Drehwinkel gegeneinander versetzt angeordnete Radialbohrungen auf, in denen jeweils eine einen Verriegelungskörper darstellende Kugel radial verschieblich einliegt und gegen Herausfallen aus der Radialbohrung gesichert ist. In Verriegelungsposition des Werkzeughalters liegen die Kugeln in Mulden ein, die um gleiche Drehwinkel versetzt in das Führungsrohr eingearbeitet sind. Eine drehverschieblich gehaltene Schiebehülse übergreift mit einem radial nach innen vorspringenden Ringsteg die Kugeln und verhindert dadurch jegliche Radialverschiebung der Kugel. Erst wenn die Schiebehülse durch eine Dreh-/Schiebebewegung in Richtung Maschinengehäuse nach hinten manuell verbracht wird, gibt der Ringsteg die Kugeln frei, und der Werkzeughalter kann bei verschoben gehaltener Schiebehülse von dem Führungsrohr abgenommen werden.

Aus der US 5 437 465 A ist eine Handwerkzeugmaschine bekannt, bei der in der Führungsrohrwand mindestens eine Verriegelungskugel radial beweglich angeordnet ist, die in axialer Richtung von einem Verriegelungsring in einer Richtung beaufschlagt ist, auf den eine Feder einwirkt. Über den Verriegelungsring wird die Verriegelungskugel radial nach innen beaufschlagt. Im Inneren des Führungsrohres ist ein federbelasteter Sperring axial verschiebbar angeordnet, der innenseitig des Führungsrohres die Verriegelungskugel überdecken kann und die Verriegelungskugel in einer Position radial außen hält. Beim Einschieben des Werkzeughalters wird durch dessen vorderes Ende der Sperring gegen die Wirkung seiner Feder unter Freigabe der Verriegelungskugel verschoben, so dass die Verriegelungskugel dann, wenn der Werkzeughalter weit genug axial eingeschoben ist, in eine zugeordnete, radial offene Verriegelungstasche, die im Schnitt etwa V-förmig ist, des Werkzeughalters verriegelnd eingreifen kann.

Aus der DE 93 05 463 U ist ein Meiselhammer mit einer Werkzeughalterung bekannt, bei der mindestens eine Verriegelungskugel durch Einstecken eines Meisels radial nach innen in eine Haltenut am Meiselschaft zu dessen Verriegelung eingreifen kann.

### Vorteile der Erfindung

Die erfindungsgemäße Handwerkzeugmaschine mit den Merkmalen des Anspruchs 1 hat den Vorteil, dass durch die über Außendurchmesser des Werkzeughalters und Innendurchmesser des Führungsrohrs vorgenommene Zentrierung des Werkzeughalters im Führungsrohr die Anschlusskonstruktion von wechselbarem Werkzeughalter und Handwerkzeugmaschine kompakt und kostengünstig ausgeführt werden kann. Sowohl der Werkzeughalter als auch das Führungsrohr können als rohrförmige Körper ohne große Durchmessersprünge realisiert werden, was den Material- und Zerspanungsaufwand und damit insgesamt den Fertigungsaufwand deutlich minimiert. Das Außenschleifen des Werkzeughalters ist fertigungstechnisch und kostenmäßig wesentlich günstiger als ein Innenschleifen. Dieser Vorteil wird auch nicht durch das erforderliche Schleifen der Innenwand des Führungsrohrs im Führungsabschnitt aufgehoben, da das Führungsrohr zur axialen Führung von Antriebselementen eines Schlagwerks ohnehin geschliffen werden muss. Durch das mögliche große Durchmesser/Längenverhältnis von Endabschnitt des Werkzeughalters und Führungsabschnitt des Führungsrohrs werden sehr gute Rundlaufeigenschaften des Werkzeughalters erreicht. Die Verriegelungsvorrichtung lässt sich sehr kostengünstig fertigen. Das Einfräsen der Verriegelungstasche auf dem Außenmantel des Werkzeughalters ist fertigungstechnisch ebenso vorteilhaft darzustellen wie die axiale Halterung des mindestens einen Verriegelungskörpers im Führungsrohr durch das Vorsehen einer einfachen, die Rohrwand durchstoßenden Radialbohrung, die den Verriegelungskörper aufnimmt. Das Sperrelement ermöglicht ein einhändiges Einstecken des Werkzeughalters in das Führungsrohr mit automatischer Verriegelung des Werkzeughalters ohne zusätzliche Betätigung der Verriegelungsvorrichtung.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß einer vorteilhaften Ausführungsform der Erfindung ist die mindestens eine Verriegelungstasche am Werkzeughalter so bemessen, dass ihre axiale Länge ein Mehrfaches der Axialabmessung des Verriegelungskörpers beträgt. Durch diese konstruktive Maßnahme wird ein Teil des erforderlichen Leerlaufweges eines das Werkzeug axial beaufschlagenden Schlagwerks vom Werkzeughalter ausgeführt, was den Relativweg des Werkzeuges im Werkzeughalter verkleinert. Durch den kürzeren Relativweg des Werkzeugs im Werkzeughalter können im Falle eines sog. SDS plus-Werkzeughalters, wie er z.B. in der DE 25 51125 C2 beschrieben ist, die Drehmitnahmeleisten im Werkzeughalter bei unveränderter Länge des Werkzeughalters verlängert werden, was zu einer Reduzierung der Drehbelastung der Drehmitnahmeleisten und somit zu einer längeren Lebensdauer des Werkzeughalters führt. Im eingerückten Schlagzustand verringert sich die Baulänge des Bohrhammers um den Verschiebeweg des Werkzeughalters. Weiterhin wird die Leerlaufqualität der Handwerkzeugmaschine verbessert, da die beim Übergang von Schlagbetrieb in den Leerlauf freiwerdende Schlagenergie vom axialen Freiheitsgrad des Werkzeughalters aufgenommen werden kann, wodurch ein Großteil des Schlagimpulses im Werkzeughalter abgebaut und nur noch ein Bruchteil in das Maschinengehäuse zurückreflektiert wird. Damit verbessert sich die Bedienungsqualität und verringert sich die Bauteilbelastung. Der Döpper des Schlagwerks kann kurz und in einfacher Form gehalten werden, was den Einsatz von kostengünstigen Fertigungstechnologien erlaubt.

Gemäß einer vorteilhaften Ausführungsform der Erfindung liegt der Steg des Federrings in einer in dem Endabschnitt angeordneten, die mindestens eine Verriegelungstasche querenden Ringnut ein. Die Ringnut ist in radialer Richtung gestuft und weist einen oberen Nutabschnitt mit größerer Nutbreite und einer der Taschentiefe entsprechenden Nuttiefe und einen unteren Nutabschnitt mit kleinerer Nutbreite auf. Die Nutflanken der Ringnut sind so geformt, dass der in dem oberen Nutabschnitt einliegende Federring ausschließlich beim Einschieben des Werkzeughalters in das Führungsrohr nach Anschlag an dem mindestens einen Verriegelungskörper in den unteren Nutabschnitt einzutauchen vermag. Der Federring ist nicht geschlossen ausgebildet, so dass er in Radialrichtung über den Endabschnitt des Werkzeughalters geschoben werden kann. Vorteilhaft ist er mit einer Ausbauchung versehen, mit der er in eine im Endabschnitt eingebrachte, radiale Fixierbohrung eingreift, so dass ein Verdrehen des Federrings auf dem Endabschnitt unterbunden ist. Auch diese konstruktive Gestaltung zur

Gewährleistung eines einhändigen Ansetzen des Werkzeughalters an die Handwerkzeugmaschine bringt fertigungstechnische Vorteile, da die Ringnut von außen in den Endabschnitt des Werkzeughalters einfach eingestochen werden kann und der mit minimalen Gestehungskosten hergestellte Federring durch einen einfachen Montagevorgang über den Endabschnitt des Werkzeughalters in die Ringnut eingedrückt werden kann.

Gemäß einer vorteilhaften Ausführungsform der Erfindung ist im Führungsrohr eine axial begrenzt verschieblich geführte Prallglocke angeordnet, die mit einem Ende in den Endabschnitt des Werkzeughalters eintaucht und außen gegenüber der Innenwand und innen gegenüber einem Döpper eines Schlagwerks abgedichtet ist. Vorzugsweise ist die Abdichtung gegenüber dem Döpper an dem in dem Werkzeughalter eintauchenden vorderen Bereich der Prallglocke vorgenommen, so dass die Abdichtung nahe an dem Eindringbereich des Staub liegt und in der Prallglocke ein verschleißmindernder Schmierfilm aufrecht erhalten wird. Durch diese Prallglocke ist sowohl der Döpper als auch das übrige Schlagwerk nach außen sehr gut gegen Staub abgedichtet, so dass die Staubanfälligkeit der Handwerkzeugmaschine unkritischer wird.

Gemäß einer vorteilhaften Ausführungsform der Erfindung weist die Prallglocke eine vordere Anschlagschulter für den Döpper auf und ist so ausgebildet, dass sie beim Übergang in den Leerlauf der Handwerkzeugmaschine die vom Döpper übertragene Stoßenergie des Schlagwerks aufzunehmen vermag. Die axiale Verschiebbarkeit der Prallglocke, deren Verschiebeweg etwa dem axialen Verschiebeweg des Werkzeughalters entspricht, und die beschriebene, energieabsorbierende Bauweise der Prallglocke ermöglicht einen einfachen, kurzen, symmetrischen Döpper, der sich kostengünstig durch Fließpressen herstellen lässt.

### Zeichnung

Die Erfindung ist anhand eines in der Zeichnung dargestellten Ausführungsbeispiels in der nachfolgenden Beschreibung näher erläutert. Es zeigen:
Fig. 1 ausschnittweise einen Längsschnitt eines Bohrhammers mit vom Bohrhammer abgenommenem, wechselbarem Werkzeughalter,
Fig. 2 einen Schnitt längs der Linie II - II in Fig. 1,
Fig. 3 eine vergrößerte Darstellung des Ausschnitts III in Fig. 1,
Fig. 4 jeweils ausschnittweise einen Längsschnitt des Bohrhammers in
und 5 Fig. 1 mit angesetztem Werkzeughalter zur Illustrierung des Montagevorgangs des Werkzeughalters,
Fig. 6 ausschnittweise einen Längsschnitt des Bohrhammers mit angesetztem Werkzeughalter in Betriebsstellung,
Fig. 7 ausschnittweise einen Längsschnitt des Bohrhammers in Fig. 1. mit entriegeltem Werkzeughalter zur Illustrierung des Demontagevorgangs des Werkzeughalters.

### Beschreibung des Ausführungsbeispiels

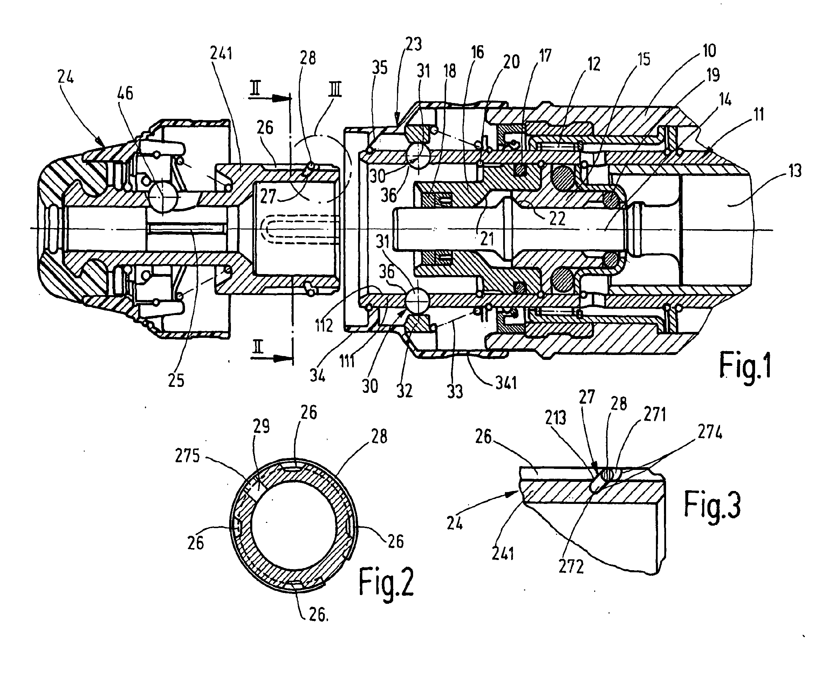

Der in Fig. 1 im Längsschnitt ausschnittweise dargestellte Bohrhammer als Ausführungsbeispiel für eine Handwerkzeugmaschine weist ein Maschinengehäuse 10 auf, in dem ein Führungsrohr 11 mittels eines Nadellagers 12 drehbar aufgenommen ist und von einem hier nicht dargestellten Drehantrieb in Rotation versetzt werden kann. Im Führungsrohr 11 ist ein Antriebskolben 13 und ein Schläger oder Döpper 14 eines Schlagwerks axial verschieblich aufgenommen. Der Antriebskolben 13 wird beispielsweise von einem Taumelantrieb in eine hin- und hergehende Bewegung versetzt und trifft dabei auf den Döpper 14, der die Schlagenergie auf ein Werkzeug überträgt. Ein Beispiel eines Schlagwerks ist in der DE 28 20 128 A1 beschrieben. In dem hier vorgestellten Ausführungsbeispiel ist der Döpper 14 in einem im Führungsrohr 11 axial unverschieblich festgelegten Führungsglied 15 axial verschieblich gehalten. Der Döpper 14 ist von einer im Führungsrohr 11 axial verschieblich geführten Prallglocke 16 umgriffen, die durch einen O-Ring 17 gegenüber der Innenwand des Führungsrohrs 11 und durch eine Wellendichtring/Filzring-Kombination 18 im vorderen Bereich des Döppers 14 gegenüber dem Döpper 14 abgedichtet ist. Der Döpper 14 ist in seiner Längsausdehnung spiegelsymmetrisch ausgeführt und mit seinem von der Prallglocke 16 abgekehrten, hinteren Abschnitt in dem Führungsglied 15 axial verschieblich geführt und gegenüber dem Führungsglied 15 durch einen weiteren O-Ring 19 abgedichtet. Der axiale Verschiebeweg der Prallglocke 16 ist einerseits durch das Führungsglied 15 und andererseits durch einen Sicherungsring 20 begrenzt, der in einer in die Innenwandfläche des Führungsrohrs 11 eingestochenen Ringnut einliegt. An der Prallglocke 16 ist eine vordere Anschlagfläche 21 und an dem Führungsglied 15 eine hintere Anschlagfläche 22 für den Döpper 14 ausgebildet.

Das Führungsrohr 11 steht mit einem Vorstehbereich 111 stirnseitig an dem Maschinegehäuse 10 vor und trägt in diesem Bereich, in den auch der Döpper 14 mit Prallglocke 16 hineinragt, eine Verriegelungsvorrichtung 23 für einen Werkzeughalter 24. Der Werkzeughalter 24, der im Ausführungsbeispiel als sog. SDS plus-Werkzeughalter ausgeführt ist, dient zum Einspannen eines Werkzeugs, das drehfest und axial verschieblich im Werkzeughalter 24 aufgenommen ist und hierzu Drehmitnahmeleisten 25 und mindestens eine Verriegelungskugel 46 trägt, die in im Werkzeugschaft eingeformte axiale Längsnuten eingreifen. Ein Beispiel für einen solchen Werkzeughalter ist ausführlich in der DE 32 05 063 C2 beschrieben. Die Prallglocke 16 ist so geformt, dass sie beim Übergang in den Leerlauf die Energie des Döppers 14 aufnimmt und an den an der Prallglocke 16 anliegenden, axial verschieblichen Werkzeughalter 24 weiterleitet.

Der Werkzeughalter 24 weist einen Endabschnitt 241 mit einem dem Innendurchmesser des Führungsrohrs 11 angepassten Außendurchmesser auf. Mit diesem Endabschnitt 241 wird der Werkzeughalter 24 in einem im Vorstehbereich 111 des Führungsrohrs 11 an dessen Innenwandfäche ausgebildeten Führungsabschnitt 112 axial verschieblich aufgenommen. Im Endabschnitt 241 sind mehrere, hier vorzugsweise vier, um gleiche Drehwinkel am Umfang zueinander versetzt angeordnete, axial sich erstreckende Verriegelungstaschen 26 ausgebildet. Des weiteren ist in den Endabschnitt 241 eine Ringnut 27 eingearbeitet, die die Verriegelungstaschen 26 schneidet. Die Ringnut 27 ist radial gestuft und weist einen oberen Nutabschnitt 271 mit größerer Nutbreite einer der radialen Tiefe der Verriegelungstaschen 26 entsprechenden radialen Tiefe und einen sich daran anschließenden Nutabschnitt 272 mit kleinerer Nutbreite auf (Fig. 3). Außerdem besitzt die Ringnut 27 eine in Einschieberichtung gesehen hintere Nutflanke 273, die geschrägt, d.h. spitzwinklig gegen die Einschieberichtung angestellt ist, und eine in Einschieberichtung des Werkzeughalters 24 vordere Nutflanke 274, die im oberen Nutabschnitt 271 etwa radial und im unteren Nutabschnitt 272 parallel zur hinteren Nutflanke 273 verläuft. In der Ringnut 27 liegt ein Federring 28 ein, der ein der axialen Verriegelung des Werkzeughalters 24 am Führungsrohr 11 dienendes, federelastisches Sperrelement bildet. Der Durchmesser des Federrings 28 ist etwas größer bemessen als die radiale Tiefe des oberen Nutabschnitts 271, so dass der Federring 28 etwas über die Außenkontur des Endabschnitts 241 vorsteht. Die Nutbreite des unteren Nutabschnitts 272 ist wenig größer als der Durchmesser des Federrings 28 und die Nutbreite des oberen Nutabschnitts 271 mindestens doppelt so groß bemessen. Wie aus Fig. 2 ersichtlich ist, ist der Federring 28 nicht geschlossen, sondern unterbrochen und kann dadurch radial auf den Endabschnitt 241 des Werkzeughalters 24 aufgeschoben werden. Er weist eine axiale Ausbuchtung 275 auf, die in eine in den Endabschnitt 274 eingebrachte Fixierbohrung 29 eingreift und ein Verdrehen des Federrings 28 auf dem Endabschnitt 241 unterbindet.

Die auf dem Führungsrohr 11 angeordnete Verriegelungsvorrichtung 23 weist eine der Anzahl der Verriegelungstaschen 26 entsprechende Anzahl von Verriegelungskörpern 30 auf, die im Vorstehbereich 111 des Führungsrohrs 11 axial unverschieblich mit Radialspiel gehalten und zum Eingriff in die Verriegelungstaschen 26 am Werkzeughalter 24 ausgebildet sind. Dabei ist der Eingriff so gestaltet, dass über die Verriegelungskörper 30 und die Verriegelungstaschen 26 eine Drehmitnahme des Werkzeughalters 24 bei rotierendem Führungsrohr 11 erfolgt. Im Ausführungsbeispiel sind die Verriegelungskörper 30 von Kugeln 31 gebildet, die in um gleiche Drehwinkel wie die Verriegelungstaschen 26 im Werkzeughalter 24 am Umfang des Führungsrohrs 11 versetzt angeordnete, die Führungsrohrwand durchstoßende Radialbohrungen 36 gehalten sind. Ein die Kugeln 31 übergreifender Verriegelungsring 32 blockiert in der in Fig. 1 zu sehenden Verriegelungsstellung der Verriegelungsvorrichtung 23 das Radialspiel der Kugeln 31. Der Verriegelungsring 32 ist in einer Schiebehülse 34 eingepresst. Die eine Griffmulde 341 zum Greifen aufweisende Schiebehülse 34 ist außen auf dem Vorstehbereich 111 des Führungsrohrs 11 axial verschieblich gehalten und übergreift das Maschinengehäuse 10. In ihrer in Fig. 1 dargestellten Verriegelungsstellung wird die Schiebehülse 34 mittels einer als Rückstellfeder fungierenden, kegelförmigen Druckfeder 33, die sich auf dem Führungsrohr 11 und am Verriegelungsring 32 abstützt, an einen Anschlag angelegt, der von einem in eine im Vorstehbereich 111 ausgebildeten Ringnut einliegenden Sicherungsring 35 gebildet ist. In dieser Verriegelungsstellung umschließt der Verriegelungsring 32 die Kugeln 31. Wird der Schieber 34 gegen die Federkraft der Druckfeder 33 in Richtung Maschinengehäuse 10 nach hinten verschoben, so gleitet der Verriegelungsring 32 von den Kugeln 31 ab, und diese können eine begrenzte Radialbewegung ausführen.

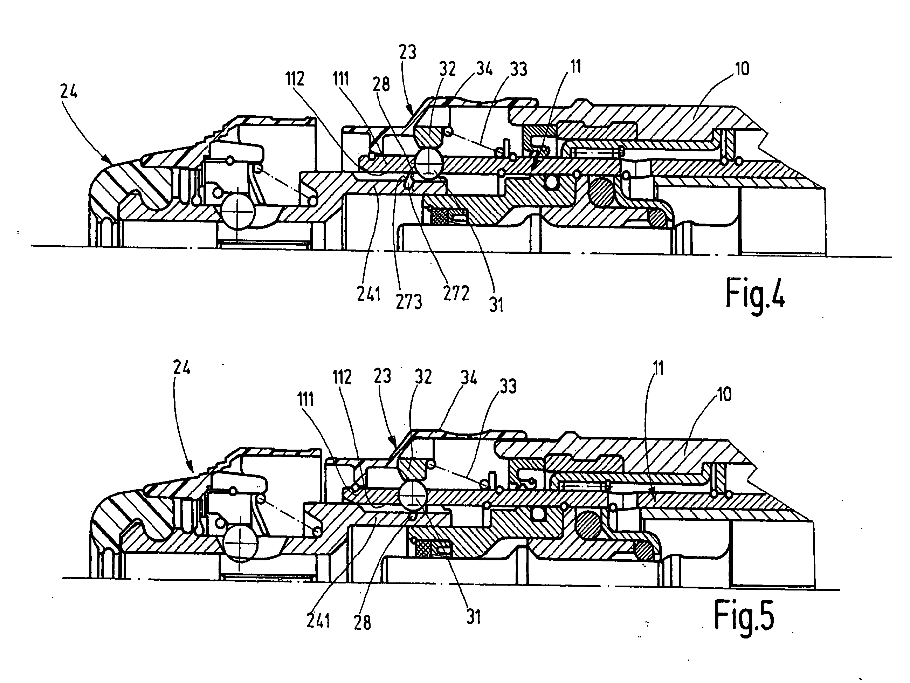

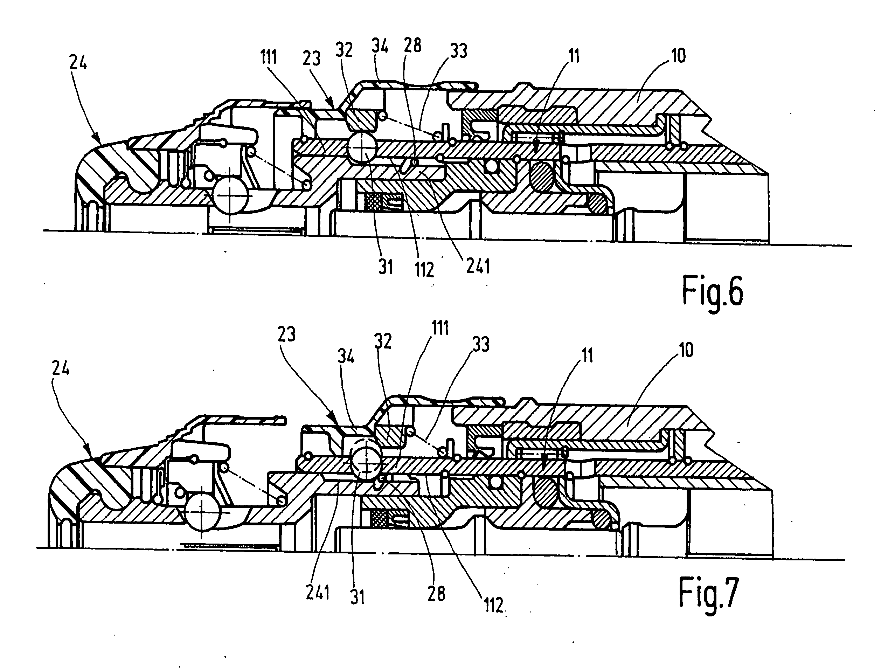

In Fig. 4 und 5 ist der Montagevorgang des Werkzeughalters 24 illustriert. Der Werkzeughalter 24 wird mit seinem Endabschnitt 241 in den Führungsabschnitt 112 im Vorstehbereich 111 des Führungsrohrs 11 eingeschoben. Die Verriegelungsvorrichtung 23 ist unbetätigt und ist durch die Druckfeder 33 in ihrer Verriegelungsstellung gehalten, in der das Radialspiel der Kugeln 31 durch den Verriegelungsring 32 blockiert ist. Beim Einschieben gelangt der in dem oberen Nutabschnitt 271 einliegende und über den Außenumfang des Endabschnitts 241 etwas vorstehende Federring 28 in Anschlag an die Kugeln 31, die im Führungsabschnitt 112 radial nach innen vorstehen (Fig. 4). Mit etwas erhöhter Verschiebekraft kann nun der Werkzeughalter 24 weiter in Einschieberichtung bewegt werden. Dabei wird der Federring 28 durch die Kugeln 31 entlang der hinteren Nutflanke 273 in den unteren Nutabschnitt 272 hineingedrückt, und der Federring 28 kann unter die Kugeln 31 hinweg weiter geschoben werden (Fig. 5). Ist die maximale Kompressionsphase des Federrings 28 überbrückt, schnappt der Federring 28 aufgrund seiner Vorspannung wieder radial nach außen in den oberen Nutabschnitt 271 und verriegelt nunmehr den Werkzeughalter 24 in dem Führungsrohr 11. In Fig. 6 ist der Bohrhammer in Betriebsstellung gezeigt. Das radiale Ausweichen der Kugeln 31 ist durch den Verriegelungsring 32 unterbunden. In Leerlaufstellung bewegt sich der Werkzeughalter 24 soweit nach vorn, dass der Federring 28 an den Kugeln 31 anschlägt. Da der Federring 28 jetzt an der vorderen, radialen Nutflanke 274 im oberen Nutabschnitt 271 anliegt, kann er weder axial noch radial ausweichen, so dass der Werkzeughalter 24 zuverlässig sicher am Führungsrohr 11 festgelegt ist.

Zum Demontieren des Werkzeughalters 24 ist die Verriegelungsvorrichtung 23 manuell zu lösen, indem die Schiebehülse 34 in Richtung Maschinengehäuse 10 nach hinten in die Entriegelungsstellung verschoben wird (Fig. 7). Dadurch wird der Verriegelungsring 32 von den Kugeln 31 abgezogen. Wird bei in Entriegelungsstellung gehaltener Schiebehülse 34 der Werkzeughalter 24 weiter in Fig. 7 nach links gezogen, so drückt der Federring 28 die Kugeln 31 radial nach außen, wie dies in Fig. 7 strichliniert eingezeichnet ist. Damit kann der Werkzeughalter 24 unter den Kugeln 31 hindurch aus dem Führungsrohr 11 herausgezogen werden.

## Patentansprüche

1. Handwerkzeugmaschine, insbesondere Bohr- oder Schlaghammer, mit einem Führungsrohr (11), mit einem an das Führungsrohr (11) wechselbar ansetzbaren Werkzeughalter (24) und mit einer den Werkzeughalter (24) am Führungsrohr (11) verriegelnden Verriegelungsvorrichtung (23), die auf dem Führungsrohr (11) angeordnet ist und durch eine vom Werkzeughalter (24) weggerichtete, axiale Verschiebung einer Schiebehülse (34) manuell lösbar ist, wobei das Führungsrohr (11) einen im vorderen Endbereich an seiner Innenwand ausgebildeten Führungsabschnitt (111) für den Werkzeughalter (24) und der Werkzeughalter (24) einen zum axialen Einschieben in den Führungsabschnitt (111) ausgebildeten Endabschnitt (241) aufweist und wobei die Verriegelungsvorrichtung (23) mindestens einen im Führungsrohr (11) radial verschieblich gehaltenen Verriegelungskörper (30) aufweist und im Endabschnitt (241) des Werkzeughalters (24) mindestens eine mit dem Verriegelungskörper (30) zur axialen Verriegelung des Werkzeughalters (24) zusammenwirkende Verriegelungstasche (26) angeordnet ist und ein federelastisches Sperrelement vorgesehen ist, das beim Einschieben des Werkzeughalters (24) in das Führungsrohr (11) eine Relativverschiebung des Endabschnitts (241) des Werkzeughalters (24) zu dem Führungsabschnitt (111) des Führungsrohrs (11) bis zum Eintauchen des Verriegelungskörpers (30) in die Verriegelungstasche (26) zulässt, **dadurch gekennzeichnet, dass** die mindestens eine Verriegelungstasche (26) am Stirnende des Endabschnitts (241) des Werkzeughalters (24) frei ausläuft und dass das federelastische Sperrelement in der Verriegelungstasche (26) einliegt und aus einem Federring (28) gebildet ist, der einen die Verriegelungstasche (26) querenden Steg aufweist, der in eine in den Taschengrund eingearbeitete Quernut gegen Federkraft eindrückbar ist.

2. Handwerkzeugmaschine nach Anspruch 1, **dadurch gekennzeichnet, dass** der Steg von einem Ringabschnitt des Federrings (28) gebildet ist, der in einer in den Endabschnitt (241) des Werkzeughalters (24) eingearbeiteten, die mindestens eine Verriegelungstasche (26) querenden Ringnut (27) einliegt, dass die Ringnut (27) in radialer Richtung gestuft ist und einen oberen Nutabschnitt (271) mit größerer Nutbreite und einer der Taschentiefe entsprechenden Nuttiefe und einem unteren Nutabschnitt (272) mit kleinerer Nutbreite aufweist, und dass die Nutflanken (273, 274) so geformt sind, dass der in dem oberen Nutabschnitt (271) einliegende Federring (28) ausschließlich beim Einschieben des Werkzeughalters (24) in das Führungsrohr (11) in den unteren Nutabschnitt (272) eindrückbar ist.

3. Handwerkzeugmaschine nach Anspruch 2, **dadurch gekennzeichnet, dass** die Ringnut (27) eine in Einschieberichtung des Werkzeughalters (24) hintere Nutflanke (273), die spitzwinklig gegen die Einschieberichtung angestellt ist, und eine in Einschieberichtung vordere Nutflanke (274) aufweist, die im wesentlichen radial verläuft.

4. Handwerkzeugmaschine nach einem der Ansprüche 1 bis 3, **dadurch gekennzeichnet, dass** der mindestens eine Verriegelungskörper (30) axial unverschieblich in einer die Führungsrohrwand durchstoßenden Radialbohrung (36) gehalten ist.

5. Handwerkzeugmaschine nach einem der Ansprüche 1 bis 4, **dadurch gekennzeichnet, dass** die mindestens eine Verriegelungstasche (26) und der darin eintauchende Verriegelungskörper (30) zur Drehmitnahme des Werkzeughalters (24) durch das Führungsrohr (11) aneinander angepasst sind.

6. Handwerkzeugmaschinen nach einem der Ansprüche 1 bis 5, **dadurch gekennzeichnet, dass** der Endabschnitt (241) des Werkzeughalters (24) eine Mehrzahl von am Umfang um Drehwinkel zueinander versetzt angeordnete Verriegelungstaschen (26) und das Führungsrohr (11) eine gleiche Anzahl von in Umfangsrichtung um Drehwinkel zueinander versetzt angeordnete Verriegelungskörper (30) aufweist und dass die Drehwinkel zwischen aufeinanderfolgenden Verriegelungstaschen (26) und die Drehwinkel zwischen aufeinanderfolgenden Verriegelungskörpern (30) einander entsprechen.

7. Handwerkzeugmaschine nach einem der Ansprüche 1 bis 6, **dadurch gekennzeichnet, dass** die axiale Länge der mindestens einen Verriegelungstasche (26) ein Mehrfaches der Axialabmessung des Verriegelungskörpers (30) beträgt.

8. Handwerkzeugmaschine nach einem der Ansprüche 1 bis 7, **dadurch gekennzeichnet, dass** die Verriegelungsvorrichtung (23) einen von einer Rückstellfeder axial beaufschlagten Verriegelungsring (32) aufweist, der in seiner Verriegelungsposition eine Radialbewegung des mindestens einen Verriegelungskörpers (30) blockiert, und dass der Verriegelungsring (32) mit einer auf dem Führungsrohr (11) axial verschiebbaren Schiebehülse (34) gekoppelt, vorzugsweise mit dieser starr verbunden, ist.

9. Handwerkzeugmaschine nach einem der Ansprüche 1 bis 8, **dadurch gekennzeichnet, dass** im Führungsrohr (11) eine axial begrenzt verschieblich geführte Prallglocke (16) angeordnet ist, die mit einem Ende in den Endabschnitt (241) des Werkzeughalters (24) eintaucht und außen gegenüber der Innenwand des Führungsrohrs (11) und innen gegenüber einem Döpper (14) eines Schlagwerks abgedichtet ist.

10. Handwerkzeugmaschine nach Anspruch 9, **dadurch gekennzeichnet, dass** die Abdichtung gegenüber dem Döpper (14) an dem in den Werkzeughalter (24) eintauchenden vorderen Ende der Prallglocke (16) vorgenommen ist.

11. Handwerkzeugmaschine nach Anspruch 9 oder 10, **dadurch gekennzeichnet, dass** die Prallglocke (16) eine vordere Anschlagfläche (21) für den Döpper (14) aufweist und so ausgebildet ist, dass sie beim Übergang in die Leerlaufstellung der Maschine die vom Döpper (14) übertragene Stoßenergie aufzunehmen vermag.

12. Handwerkzeugmaschine nach einem der Ansprüche 8 bis 11, **dadurch gekennzeichnet, dass** das Führungsrohr (11) in einem Maschinengehäuse (10) drehbar gelagert ist und endseitig aus dem Maschinengehäuse (10) vorsteht und dass die Schiebehülse (34) das Maschinengehäuse (10) endseitig übergreift.

13. Handwerkzeugmaschine nach einem der Ansprüche 1 bis 12, **dadurch gekennzeichnet, dass** der mindestens eine Verriegelungskörper (30) als Kugel (31) ausgebildet ist.

## Claims

1. Portable power tool, in particular a rotary or demolition hammer, comprising a guide tube (11), comprising a tool holder (24) which can be interchangeably attached to the guide tube (11), and comprising a locking device (23) which locks the tool holder (24) on the guide tube (11) and which is arranged on the guide tube (11) and can be manually released by an axial displacement of a sliding sleeve (34) directed away from the tool holder (24), wherein the guide tube (11) has a guide section (111), formed in the front region on the inner wall thereof, for the tool holder (24), and the tool holder (24) has an end section (241) formed for axially pushing into the guide section (111), and wherein the locking device (23) has at least one locking body (30) held in a radially displaceable manner in the guide tube (11), and at least one locking pocket (26) interacting with the locking body (30) for axially locking the tool holder (24) is arranged in the end section (241) of the tool holder (24), and an elastic blocking element is provided which, when the tool holder (24) is being pushed into the guide tube (11), permits a displacement of the end section (241) of the tool holder (24) relative to the guide section (111) of the guide tube (11) until the locking body (30) plunges into the locking pocket (26), **characterized in that** the at least one locking pocket (26) runs out freely at the front end of the end section (241) of the tool holder (24), and **in that** the elastic blocking element rests in the locking pocket (26) and is formed from a spring ring (28) which has a web which crosses the locking pocket (26) and can be pressed against spring force into a transverse groove made in the bottom of the pocket.

2. Portable power tool according to Claim 1, **characterized in that** the web is formed by an annular section of the spring ring (28), said annular section resting in an annular groove (27) which is made in the end section (241) of the tool holder (24) and crosses the at least one locking pocket (26), **in that** the annular groove (27) is stepped in the radial direction and has a top groove section (271) of larger groove width and of a groove depth corresponding to the pocket depth and a bottom groove section (272) of smaller groove width, and **in that** the groove flanks (273, 274) are shaped in such a way that the spring ring (28) resting in the top groove section (271) can be pressed into the bottom groove section (272) only when the tool holder (24) is being pushed into the guide tube (11).

3. Portable power tool according to Claim 2, **characterized in that** the annular groove (27) has a rear groove flank (273) in the push-in direction of the tool holder (24), said rear groove flank (273) being set at an acute angle to the push-in direction, and a front groove flank (274) in the push-in direction, said front groove flank (274) running substantially radially.

4. Portable power tool according to one of Claims 1 to 3, **characterized in that** the at least one locking body (30) is held in an axially fixed manner in a radial hole (36) passing through the guide tube wall.

5. Portable power tool according to one of Claims 1 to 4, **characterized in that** the at least one locking pocket (26) and the locking body (30) plunging therein are adapted to one another for the rotary driving of the tool holder (24) by the guide tube (11).

6. Portable power tool according to one of Claims 1 to 5, **characterized in that** the end section (241) of the tool holder (24) has a plurality of locking pockets (26) arranged offset from one another by rotational angles at the circumference, and the guide tube (11) has an identical number of locking bodies (30) arranged offset from one another by rotational angles in the circumferential direction, and **in that** the rotational angles between successive locking pockets (26) and the rotational angles between successive locking bodies (30) correspond to one another.

7. Portable power tool according to one of Claims 1 to 6, **characterized in that** the axial length of the at least one locking pocket (26) is a multiple of the axial dimension of the locking body (30).

8. Portable power tool according to one of Claims 1 to 7, **characterized in that** the locking device (23) has a locking ring (32) which is acted upon axially by a restoring spring and which blocks in its locking position a radial movement of the at least one locking body (30), and **in that** the locking ring (32) is coupled, preferably rigidly connected, to a sliding sleeve (34) which is axially displaceable on the guide tube (11).

9. Portable power tool according to one of Claims 1 to 8, **characterized in that** an impact bell (16) displaceably guided to an axially limited extent is arranged in the guide tube (11), which impact bell (16) plunges with one end into the end section (241) of the tool holder (24) and is sealed on the outside relative to the inner wall of the guide tube (11) and on the inside relative to an anvil (14) of a percussion mechanism.

10. Portable power tool according to Claim 9, **characterized in that** the sealing relative to the anvil (14) is effected at the front end of the impact bell (16), said front end plunging into the tool holder (24).

11. Portable power tool according to Claim 9 or 10, **characterized in that** the impact bell (16) has a front stop surface (21) for the anvil (14) and is designed in such a way that, during the changeover to the idling position of the machine, it is able to absorb the percussion energy transmitted by the anvil (14).

12. Portable power tool according to one of Claims 8 to 11, **characterized in that** the guide tube (11) is rotatably mounted in a machine housing (10) and projects at the end from the machine housing (10), and **in that** the sliding sleeve (34) overlaps the machine housing (10) at the end.

13. Portable power tool according to one of Claims 1 to 12, **characterized in that** the at least one locking body (30) is designed as a ball (31).

## Revendications

1. Machine-outil à main, notamment marteau perforateur ou percuteur, comprenant un tube de guidage (11) avec un porte-outil (24) pouvant être placé de manière amovible sur le tube de guidage (11) et avec un dispositif de verrouillage (23) verrouillant le porte-outil (24) sur le tube de guidage (11), qui est disposé sur le tube de guidage (11) et qui peut être desserré manuellement par coulissement axial à l'écart du porte-outil (24) d'un manchon coulissant (34), le tube de guidage (11) présentant une portion de guidage (111) réalisée sur sa paroi intérieure dans la région d'extrémité avant pour le porte-outil (24) et le porte-outil (24) présentant une portion d'extrémité (241) réalisée pour l'insertion axiale dans la portion de guidage (111) et le dispositif de verrouillage (23) présentant au moins un corps de verrouillage (30) maintenu de manière à pouvoir coulisser radialement dans le tube de guidage (11), et au moins une cavité de verrouillage (26) coopérant avec le corps de verrouillage (30) pour le verrouillage axial du porte-outil (24) étant disposée dans la portion d'extrémité (241) du porte-outil (24) et un élément de blocage élastique à ressort étant prévu, lequel autorise un coulissement relatif de la portion d'extrémité (241) du porte-outil (24) par rapport à la portion de guidage (111) du tube de guidage (11) jusqu'à l'enfoncement du corps de verrouillage (30) dans la cavité de verrouillage (26) lors de l'enfoncement du porte-outil (24) dans le tube de guidage (11), **caractérisée en ce que** l'au moins une cavité de verrouillage (26) se termine librement à l'extrémité frontale de la portion d'extrémité (241) du porte-outil (24) et **en ce que** l'élément de blocage élastique à ressort s'insère dans la cavité de verrouillage (26) et est formé par une bague à ressort (28), qui présente une nervure traversant la cavité de verrouillage (26), qui peut être enfoncée à l'encontre d'une force de ressort dans une rainure transversale pratiquée au fond de la cavité.

2. Machine-outil à main selon la revendication 1, **caractérisée en ce que** la nervure est formée par une portion annulaire de la bague à ressort (28), qui s'insère dans une rainure annulaire (27) traversant l'au moins une cavité de verrouillage (26), pratiquée dans la portion d'extrémité (241) du porte-outil (24), **en ce que** la rainure annulaire (27) est étagée dans la direction radiale et présente une portion de rainure supérieure (271) de plus grande largeur de rainure et d'une profondeur de rainure correspondant à la profondeur de la cavité et ayant une portion de rainure inférieure (272) de plus petite largeur de rainure, et **en ce que** les flancs de rainure (273, 274) sont formés de telle sorte que la bague à ressort (28) s'insérant dans la portion de rainure supérieure (271) puisse être enfoncée dans la portion de rainure inférieure (272) exclusivement lors de l'insertion du porte-outil (24) dans le tube de guidage (11).

3. Machine-outil à main selon la revendication 2, **caractérisée en ce que** la rainure annulaire (27) présente un flanc de rainure arrière (273) dans la direction d'enfoncement du porte-outil (24) qui est incliné à angle aigu par rapport à la direction d'enfoncement, et un flanc de rainure avant (274) dans la direction d'enfoncement, qui s'étend essentiellement radialement.

4. Machine-outil à main selon l'une quelconque des revendications 1 à 3, **caractérisée en ce que** l'au moins un corps de verrouillage (30) est maintenu de manière non déplaçable axialement dans un alésage radial (36) traversant la paroi du tube de guidage.

5. Machine-outil à main selon l'une quelconque des revendications 1 à 4, **caractérisée en ce que** l'au moins une cavité de verrouillage (26) et le corps de verrouillage (30) plongeant dans celle-ci sont adaptés l'un à l'autre en vue d'entraîner en rotation le porte-outil (24) par le tube de guidage (11).

6. Machine-outil à main selon l'une quelconque des revendications 1 à 5, **caractérisée en ce que** la portion d'extrémité (241) du porte-outil (24) présente une pluralité de cavités de verrouillage (26) disposées de manière décalée les unes par rapport aux autres suivant des angles de rotation sur la périphérie, et le tube de guidage (11) présente un nombre identique de corps de verrouillage (30) disposés de manière décalée les uns par rapport aux autres d'angles de rotation sur la périphérie et **en ce que** les angles de rotation entre les cavités de verrouillage successives (26) et les angles de rotation entre les corps de verrouillage successifs (30) coïncident mutuellement.

7. Machine-outil à main selon l'une quelconque des revendications 1 à 6, **caractérisée en ce que** la longueur axiale de l'au moins une cavité de verrouillage (26) vaut un multiple de la dimension axiale du corps de verrouillage (30).

8. Machine-outil à main selon l'une quelconque des revendications 1 à 7, **caractérisée en ce que** le dispositif de verrouillage (23) présente une bague de verrouillage (32) sollicitée axialement par un ressort de rappel, qui bloque dans sa position de verrouillage un mouvement radial de l'au moins un corps de verrouillage (30), et **en ce que** la bague de verrouillage (32) est accouplée à un manchon coulissant (34) déplaçable axialement sur le tube de guidage (11), de préférence est connectée rigidement à celui-ci.

9. Machine-outil à main selon l'une quelconque des revendications 1 à 8, **caractérisée en ce que** l'on dispose dans le tube de guidage (11) une cloche d'impact (16) guidée de manière déplaçable axialement dans une mesure limitée, qui plonge avec une extrémité dans la portion d'extrémité (241) du porte-outil (24) et qui est rendue étanche à l'extérieur par rapport à la paroi intérieure du tube de guidage (11) et à l'intérieur par rapport à une bouterolle (14) d'un mécanisme percuteur.

10. Machine-outil à main selon la revendication 9, **caractérisée en ce que** l'étanchéité par rapport à la bouterolle (14) est réalisée à l'extrémité avant de la cloche d'impact (16) qui plonge dans le porte-outil (24) .

11. Machine-outil à main selon la revendication 9 ou 10, **caractérisée en ce que** la cloche d'impact (16) présente une surface de butée avant (21) pour la bouterolle (14) et est réalisée de telle sorte qu'elle puisse recevoir l'énergie de choc transmise par la bouterolle (14) lors du passage dans la position de marche à vide de la machine.

12. Machine-outil à main selon l'une quelconque des revendications 8 à 11, **caractérisée en ce que** le tube de guidage (11) est monté de manière rotative dans un boîtier de machine (10) et dépasse du côté de l'extrémité hors du boîtier de machine (10) et **en ce que** le manchon coulissant (34) vient en prise par le dessus du côté de l'extrémité avec le boîtier de machine (10).

13. Machine-outil à main selon l'une quelconque des revendications 1 à 12, **caractérisée en ce que** l'au moins un corps de verrouillage (30) est réalisé sous forme sphérique (31).
